# FASCICULE DE BREVET EUROPEEN

(11) **EP 4 296 013 B1**
(45) Date de publication et mention de la délivrance du brevet: **04.03.2026**
(21) Numéro de dépôt: 23171800.8
(22) Date de dépôt: 05.05.2023
(51) Int. Cl.: B25J 15/10, G04D 1/00, B25J 9/00

(54) **PRÉHENSEUR DE COMPOSANT D' HORLOGERIE**
GREIFER FÜR UHRENKOMPONENTE
GRIPPER FOR A TIMEPIECE COMPONENT

(30) Priorité: 21.06.2022 EP 22180084
(43) Date de publication de la demande: 27.12.2023
(73) Titulaire: ETA SA Manufacture Horlogère Suisse, 2540 Grenchen (CH)
(72) Inventeur: GIGON, Basile, 2300 La Chaux-de-Fonds (CH)
(74) Mandataire: ICB SA

(56) Documents cités:
- EP-A1- 1 454 691
- EP-A1- 3 639 972
- EP-A2- 2 366 506
- EP-B1- 0 497 112
- CN-A- 106 975 942
- BUTEFISCH S ET AL: "Novel micro-pneumatic actuator for MEMS", SENSORS AND ACTUATORS A: PHYSICAL, ELSEVIER BV, NL, vol. 97-98, 1 April 2002 (2002-04-01), pages 638 - 645, XP004361660, ISSN: 0924-4247, DOI: 10.1016/S0924-4247(01)00843-3

## Description

### Domaine technique de l'invention

L'invention concerne le domaine de la manipulation et/ou du maintien de composants d'horlogerie lors de leur fabrication et/ou de leur assemblage, en particulier dans le cadre d'une production automatisée.

Plus particulièrement, l'invention concerne un préhenseur à serrage radial pour composant d'horlogerie, comportant, répartis de façon opposée autour d'un axe définissant une direction d'insertion et/ou d'extraction et fixés à un support que comporte ledit préhenseur, une pluralité de mors d'appui comportant chacun une surface d'appui agencée pour assurer un contact radial, dans un même plan perpendiculaire audit axe, avec une surface antagoniste d'un dit composant, et dont au moins un dit mors est mobile essentiellement radialement par rapport audit axe.

### Arrière-plan technologique

La manipulation et le maintien de composants d'horlogerie, au cours de leur fabrication, sont toujours délicats. Longtemps la main humaine a été la seule solution fiable. Le développement de la production automatisée a nécessité la mise en œuvre de processus assurant les fonctions de manipulation ou de maintien sans déformer les composants, en particulier dans les phases finales de leur élaboration, où les sections de matière peuvent être très réduites, et où les zones de préhension sont parfois difficiles d'accès. La solution industrielle la plus répandue est l'utilisation du vide ; cette solution efficace se traduit néanmoins par une forte consommation d'énergie, et par des nuisances sonores.

Le document EP 1454691 A1 propose un dispositif de fixation par serrage d'une ébauche de pièce à usiner sur un socle qui présente une surface de support conformée pour recevoir une face de l'ébauche. Le serrage est réalisé au moyen de deux mâchoires reliées au socle par des systèmes à quatre articulations élastiques, l'ouverture et la fermeture des mâchoires étant commandées par un poussoir guidé dans le socle. En particulier, les systèmes à quatre articulations sont conçus de façon que, en position de serrage, les mâchoires appuient sur deux bords opposés de l'ébauche et que, sous l'action du poussoir, elles s'écartent de l'ébauche selon deux trajectoires incurvées déterminées par la géométrie des systèmes à quatre articulations. Ce dispositif de fixation d'une ébauche sur un socle est complexe et onéreux. De plus, il est adapté à une ébauche spécifique, en particulier une ébauche dont la hauteur est prédéterminée et fixe à cause des mâchoires qui viennent s'appuyer sur le bord supérieur de l'ébauche.

Le document EP 0497112 A1 décrit un dispositif de préhension prévu dans un analyseur pour retirer et insérer un bouchon de et dans l'ouverture d'un récipient. Ce dispositif comprend une pince, effectuant des mouvements rotatifs et interagissant par frottement avec le bouchon, et un dispositif de levage amenant le récipient à la pince et le fixant. La pince comporte trois éléments de serrage disposés radialement et mobiles radialement au moyen de trois éléments de commande qui leur sont associés et qui sont situés dans une zone périphérique aux trois éléments de serrage. Chaque élément de commande est pourvu d'une première section de came ayant un petit rayon et d'une seconde section de came ayant un plus grand rayon, ces deux sections étant reliées entre elles par une rampe. Les éléments de commande sont agencés pour pouvoir tourner autour d'un pivot commun par rapport aux éléments de serrage. Chaque élément de serrage comporte à son extrémité extérieure un rouleau monté rotatif qui demeure en contact avec l'élément de commande respectif sous l'action d'au moins un élément ressort qui pousse l'élément de serrage vers l'extérieur pour assurer que le rouleau puisse rouler le long de la rampe intermédiaire entre les deux sections de cet élément de commande respectif et demeurer ensuite en pression contre l'une ou l'autre des deux sections périphériques. Un tel dispositif de préhension comprend plusieurs pièces distinctes dont des éléments roulant. Ce dispositif est très complexe, encombrant et onéreux.

### Résumé de l'invention

L'invention se propose de mettre au point un préhenseur pour composants d'horlogerie, permettant une manipulation et/ou un maintien d'un composant sans recourir à une dépression, et ne nécessitant pas d'énergie autre que celle déjà imprimée au manipulateur portant le préhenseur pour ses mouvements dans l'espace. Un autre objectif est de fournir un préhenseur compact et peu encombrant. Encore un autre objectif est de fournir un préhenseur qui soit robuste et dont des éléments relativement délicats sont protégés efficacement.

A cet effet, l'invention comprend un préhenseur à serrage radial, pour un composant d'horlogerie, comportant une pluralité de mors répartis autour d'un axe, qui définit une direction d'insertion et/ou d'extraction pour le composant d'horlogerie, et reliés à un support du préhenseur, chaque mors comportant une surface d'appui agencée pour assurer un contact radial, relativement audit axe, avec une surface antagoniste dudit composant et pour pouvoir appliquer sur cette surface antagoniste une force de serrage radial, au moins un dit mors étant mobile radialement par rapport audit axe et ayant une course essentiellement radiale par rapport à cet axe. Selon l'invention, chaque mors mobile est relié audit support par un moyen de rappel élastique radial ou une zone à capacité de déformation élastique radiale qui s'étend dans un plan général perpendiculaire audit axe, la force de serrage radial exercée par chaque mors mobile sur le composant étant déterminée par la constante élastique du moyen de rappel élastique radial respectif ou de la zone à capacité de déformation élastique radiale respective.

### Brève description des figures

Les buts, avantages et caractéristiques de l'invention apparaîtront mieux à la lecture de la description détaillée qui va suivre, en référence aux dessins annexés donnés à titre non limitatifs, dans lesquels :

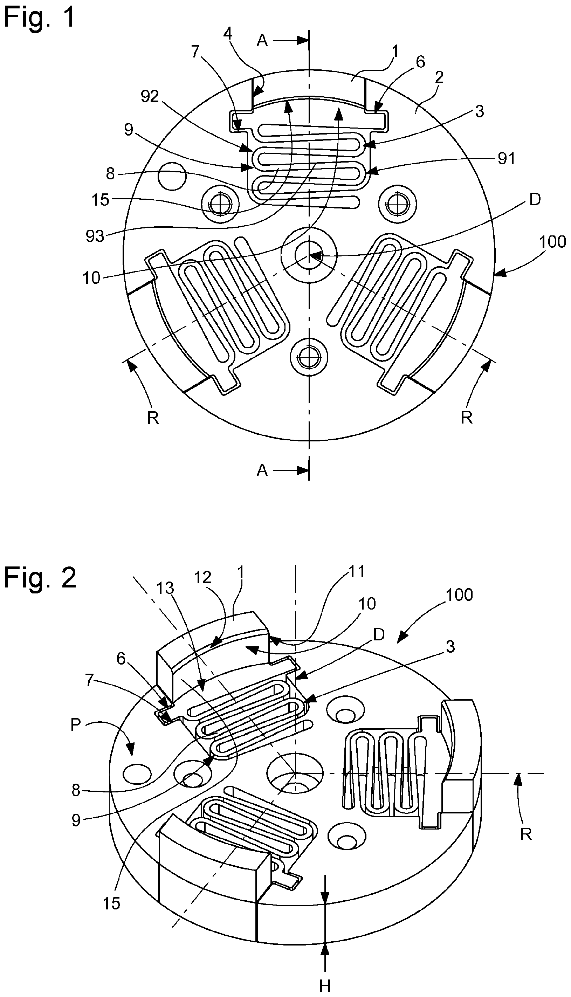

- La figure 1 représente, de façon schématisée et en plan, un préhenseur selon l'invention, à serrage radial, pour le maintien et/ou la manipulation d'un composant d'horlogerie ; ce préhenseur comporte une pluralité de mors assemblés sur un support, sous la forme de mors mobiles ayant une mobilité dans un plan perpendiculaire à un axe autour duquel s'étend le composant à maintenir et/ou à manipuler, auquel cas cet axe correspond à la direction d'insertion ou d'extraction relative entre le préhenseur et ce composant, la mobilité du mors mobile étant radiale par rapport à ce même axe. Ce mors mobile est relié élastiquement au support par au moins une liaison élastique, qui est, dans le cas spécifique de cette figure, constituée par un moyen de rappel élastique sous la forme d'un ressort en serpent ; le mors mobile est mobile dans un logement du support, lequel logement le contraint à une mobilité dans un plan radial passant par l'axe. Les courses centrifuge et centripète du mors mobile sont limitées par un mécanisme de butées, ici assurées non limitativement par la coopération avec jeu de tenons solidaires du mors mobile dans des mortaises solidaires du support. Dans cet exemple non limitatif, le préhenseur est monobloc ;
- La figure 2 représente, de façon schématisée et en perspective, un préhenseur voisin de celui de la figure 1 ; ce préhenseur en plusieurs parties comporte un corps de préhenseur monobloc comportant le support, au moins un moyen de rappel élastique, et au moins une semelle de support, portant un relief saillant, notamment amovible, ce qui permet de réaliser le corps de préhenseur monobloc avec une hauteur H constante. Le relief saillant du mors mobile comporte, de part et d'autre d'une surface d'appui du composant, notamment une surface cylindrique, une surface d'introduction biseautée et/ou rayonnée pour faciliter l'insertion relative d'un composant dans ou sur le préhenseur, ou inversement, et une surface frontale de butée, qui est agencée pour coopérer en appui axial avec un composant pour l'arrêter dans une position axiale précise;

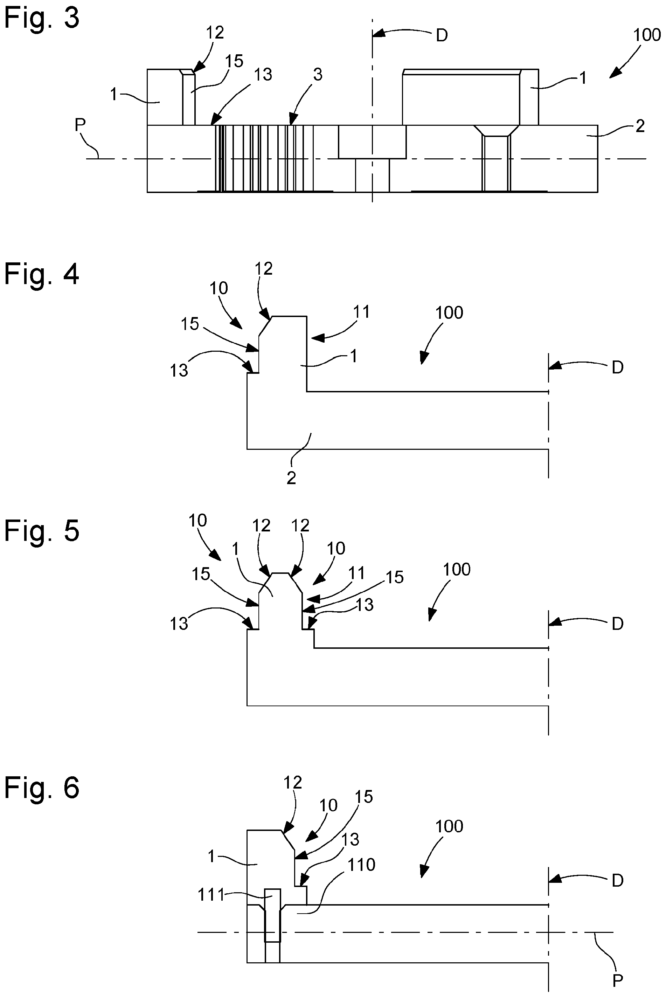

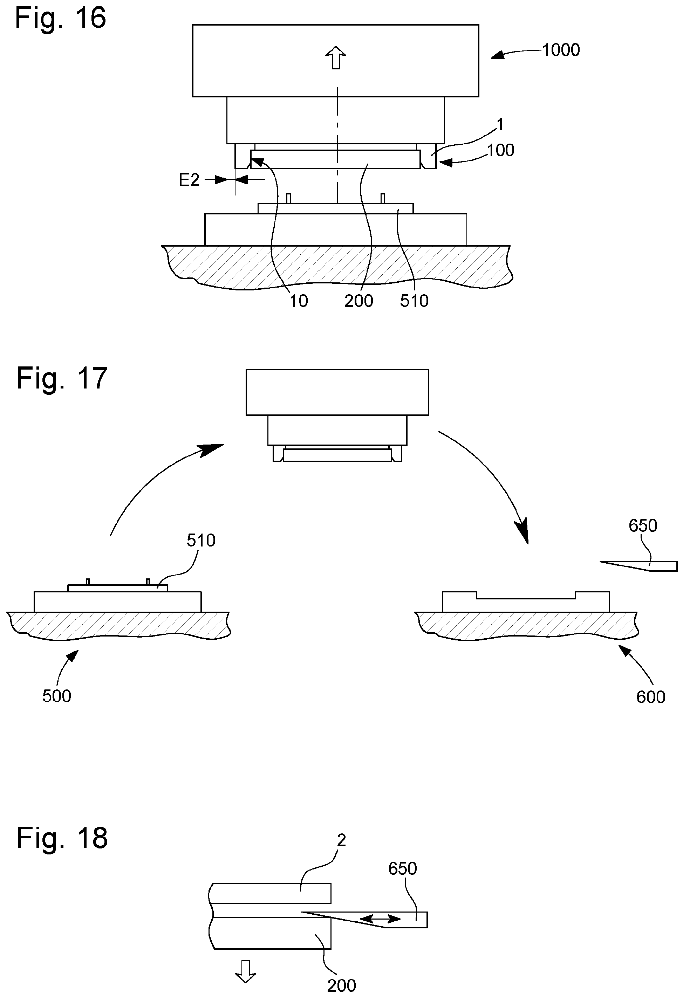

- La figure 3 représente, de façon schématisée et en coupe, le préhenseur monobloc de la figure 1, selon la ligne de coupe AA de cette figure, le mors mobile est conçu pour un serrage externe du composant à maintenir et/ou à manipuler ;
- La figure 4 représente, de façon similaire à la figure 3, une variante du préhenseur monobloc de la figure 1, dans laquelle le mors mobile est conçu pour un serrage interne du composant à maintenir et/ou à manipuler ;
- La figure 5 représente, de façon similaire aux figures 3 et 4, une variante du préhenseur monobloc de la figure 1, dans laquelle le mors mobile est conçu pour un serrage interne ou externe du composant à maintenir et/ou à manipuler ;
- La figure 6 représente, de façon schématisée et en coupe, le préhenseur en plusieurs parties de la figure 2, où le mors mobile est conçu pour un serrage externe du composant à maintenir et/ou à manipuler ; ce mors mobile comporte un relief saillant amovible assemblé sur une semelle solidaire du bloc support monobloc, ici par des goupilles ;

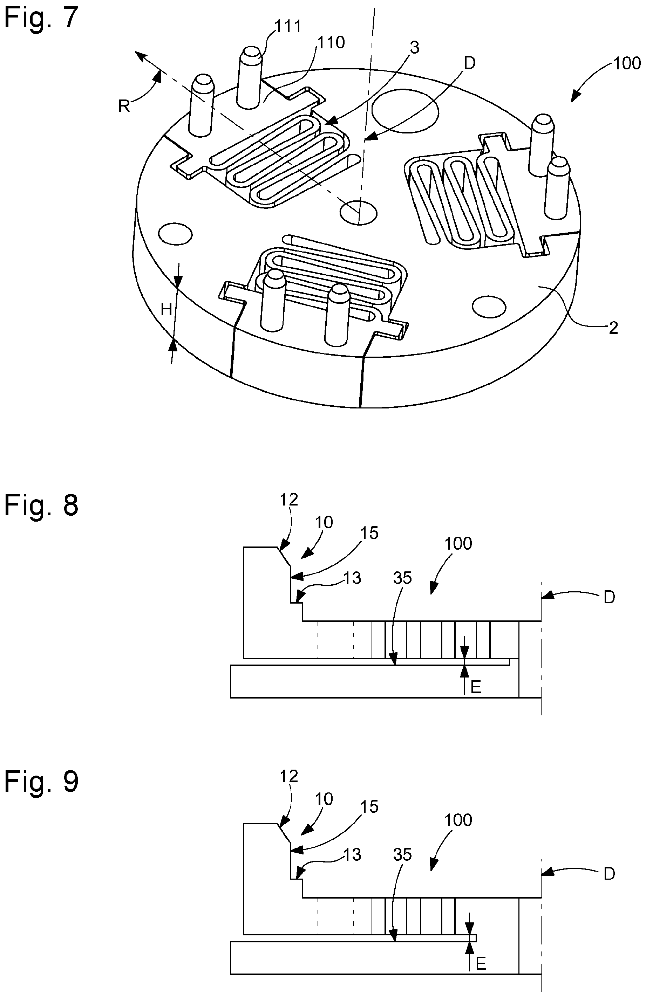

- La figure 7 représente, de façon schématisée et en perspective, le préhenseur des figures 2 et 6, dont le relief saillant du mors mobile n'est pas monté, deux goupilles saillant d'une semelle sont disposées pour recevoir ce relief saillant rapporté ;
- La figure 8 représente, de façon schématisée en coupe passant par l'axe, un autre préhenseur en plusieurs parties, où le support est décomposé en deux plaques, l'une supérieure portant le mors mobile et comportant les moyens de rappel élastique, et l'autre inférieure, fixée à la précédente, et comportant une surface de limitation, à distance non nulle des moyens de rappel élastique de suspension de mors mobile, pour prévenir toute déformation permanente et toute rupture d'un tel moyen de rappel élastique ;
- La figure 9 représente, de façon schématisée et en coupe passant par l'axe, un autre préhenseur monobloc, qui comporte une surface de limitation, à distance non nulle des moyens de rappel élastique de suspension de mors mobile, pour prévenir toute déformation permanente et toute rupture d'un tel moyen de rappel élastique ;

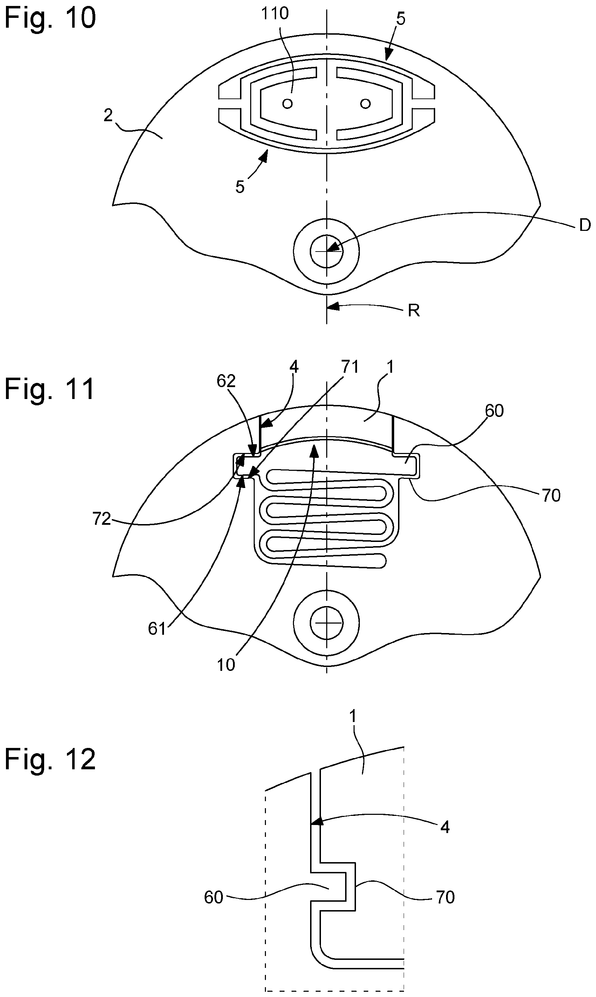

- La figure 10 représente, de façon schématisée et en vue en plan, un détail d'un autre mode de réalisation de préhenseur en plusieurs parties, où la suspension de la semelle du mors mobile est assurée par des zones à capacité de déformation élastique radiale situées radialement de part et d'autre de cette semelle ;
- La figure 11 représente, de façon schématisée et en vue en plan, un détail de la coopération par butées entre le mors mobile comportant ici des tenons et le support comportant ici des mortaises ;
- La figure 12 représente, de façon schématisée et en plan, un détail de la coopération par butées entre le mors mobile comportant ici des mortaises, et le support comportant ici des tenons ;

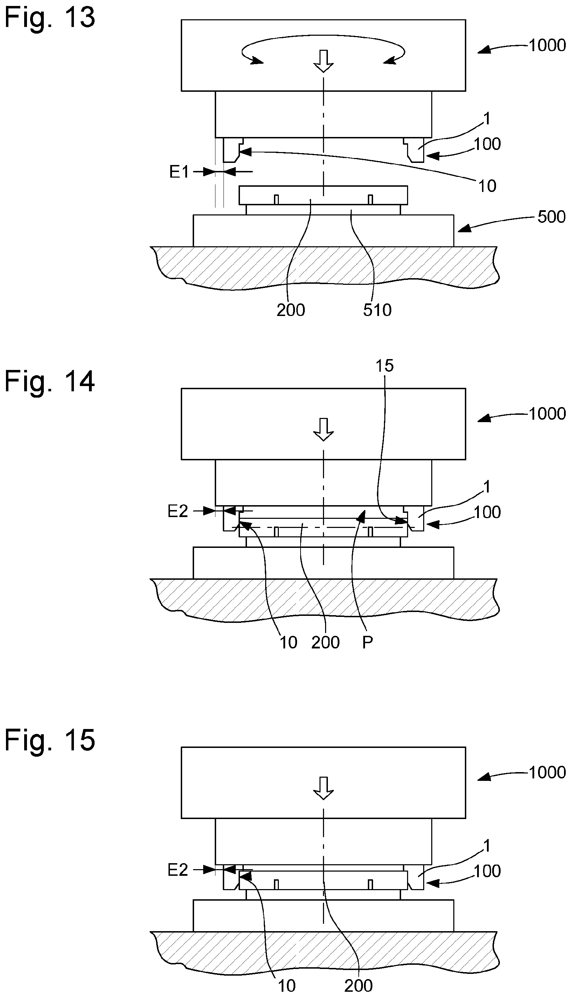

- Les figures 13 à 18 illustrent, de façon schématisée et en vue de côté, les étapes d'un transfert, effectué par un manipulateur, comportant un préhenseur selon l'invention, pour l'extraction d'un composant d'horlogerie d'un premier poste de production ou de convoyage, et notamment d'un premier posage, vers un autre poste de production ou de convoyage :
   ∘ La figure 13 montre l'approche descendante du préhenseur avec ses mors dans une position d'excentration radiale minimale, vers un composant maintenu sur un premier posage ;
   ∘ La figure 14 montre la poussée relative entre les mors et ce composant, guidé sur les surfaces d'insertion et venant en appui sur des surfaces d'appui des mors, qui sont parallèles à l'axe ;
   ∘ La figure 15 montre l'achèvement de la course verticale, avec la mise en position de butée axiale du composant dans les mors dans une position d'excentration radiale maximale E2 ;
   ∘ La figure 16 illustre le dégagement du préhenseur, et la désolidarisation du composant d'avec le premier posage qui le supportait jusqu'alors ;
   ∘ La figure 17 montre le transfert du préhenseur vers un autre poste de production ou de convoyage ;
   ∘ La figure 18 est un détail montrant l'éjection du composant, sous l'action d'un doigt éjecteur inséré entre le support du préhenseur et le composant, par exemple dans une fente ménagée à cet effet dans le préhenseur.

### Description détaillée de l'invention

La figure 1 montre une représentation schématique d'un préhenseur selon l'invention, qui concerne un préhenseur 100 à serrage radial pour un composant d'horlogerie 200.

Par composant d'horlogerie on entend ici tout composant élémentaire ou sous-ensemble intégré dans une pièce d'horlogerie telle que montre, horloge, ou similaire. Les figures illustrent une application nullement limitative de l'invention pour un composant 200 qui est une ébauche de montre, une platine, une carrure, une boîte, une masse oscillante, ou similaire, de dimensions et masse de l'ordre de celles d'une pièce de monnaie, ces exemples particuliers constituant des éléments rigides, sur lesquels on peut appliquer un effort radial raisonnable de préhension sans leur imprimer une déformation permanente. L'invention est néanmoins conçue aussi pour la préhension d'autres types de composants horlogers, notamment des composants avec des sections de matière très fines, par exemple des balanciers ou similaires, pour lesquels il suffira d'adapter les caractéristiques mécaniques du préhenseur, pour maîtriser l'application d'efforts de préhension sans conduire à une déformation permanente du composant 200.

Le préhenseur 100 à serrage radial, pour un composant d'horlogerie 200, comporte une pluralité de mors 1 répartis autour d'un axe D, qui définit une direction d'insertion et/ou d'extraction pour le composant d'horlogerie, et reliés à un support 2 du préhenseur. Chaque mors 1 comporte une surface d'appui 10 agencée pour assurer un contact radial, relativement audit axe, avec une surface antagoniste dudit composant d'horlogerie et pour pouvoir appliquer sur cette surface antagoniste une force de serrage radial, et donc une pression radiale sur la surface antagoniste, au moins un dit mors, avantageusement la pluralité de mors étant mobile(s) radialement par rapport audit axe D et ayant une course essentiellement radiale par rapport à cet axe.

Selon l'invention, chaque mors mobile 1 est relié audit support 2 par un moyen de rappel élastique radial 3 qui s'étend dans un plan général P perpendiculaire audit axe D.

Selon une variante préférée, chaque moyen de rappel élastique radial 3 est agencé entre l'axe D et le mors mobile le reliant audit support 2.

Selon une variante avantageuse, le support 2 s'étend également dans ledit plan général P.

Selon l'invention, au moins un mors mobile 1, et plus particulièrement chaque mors mobile 1, a une course radiale qui est définie, ou bien par la capacité de déformation élastique radiale d'au moins un moyen de rappel élastique 3 par lequel ce mors 1 mobile est suspendu au support 2, ou bien par la capacité de déformation élastique radiale d'au moins une zone à capacité de déformation élastique radiale 5 que comporte le support 2 et dont est solidaire ce mors 1 mobile. Le moyen de rappel élastique 3 peut être un composant rapporté tel qu'un ressort, ou bien être monobloc avec le mors 1 mobile et/ou avec le support 2.

Selon l'invention, au moins un tel mors 1 mobile, et de préférence chaque mors mobile 1, a une course essentiellement, et plus particulièrement strictement, radiale par rapport à l'axe D. Cette course essentiellement radiale, et plus particulièrement strictement radiale est prévue dans une plage de déformation élastique du moyen de rappel élastique radial 3.

En particulier, cette course strictement radiale par rapport à l'axe D est définie par la coopération entre, d'une part des surfaces mobiles de butée 6 que comporte le mors 1 mobile, et d'autre part des surfaces fixes de butée 7 que comporte le support 2.

Dans une variante illustrée, tel que visible sur la figure 11, ce mors 1 mobile comporte deux telles surfaces mobiles de butée 6, l'une première 61 tournée vers l'axe D et l'autre deuxième 62 opposée à l'axe D ; et le support 2 comporte deux surfaces fixes de butée 7, l'une première 71 opposée à l'axe D et agencée pour venir en appui de fin de course radiale centripète avec la première surface mobile de butée 61, et l'autre deuxième 72 tournée vers l'axe D et agencée pour venir en appui de fin de course radiale centrifuge avec la deuxième surface mobile de butée 62.

Plus particulièrement, les surfaces mobiles de butée 6 sont portées par un tenon 60 que comporte le mors 1 mobile, et les surfaces fixes de butée 7 sont celles d'une mortaise 70 que comporte le support 2, tel que visible notamment sur les figures 1, 2, 11, ou inversement tel que visible sur la figure 12.

Dans une exécution avantageuse, les surfaces mobiles de butée 6 et les surfaces fixes de butée 7 sont agencées pour coopérer dans le plan général P.

Dans une variante illustrée notamment par les figures 1 et 11, au moins un tel mors 1 mobile, et plus particulièrement chaque mors 1 mobile, qui est suspendu par au moins un moyen de rappel élastique 3 au support 2, est guidé dans un logement de guidage 4 que comporte ce support 2.

Plus particulièrement, le guidage du mors 1 mobile dans ce logement de guidage 4 est alors strictement radial par rapport à l'axe D.

Dans une variante avantageuse, au moins un moyen de rappel élastique 3, de préférence tous les moyens de rappel élastique radiaux présente(nt), dans le plan général P dans lequel les moyens de rappel élastiques radiaux s'étendent, la forme d'un serpent avec une lame élastique 8 formant des boucles 9 en zig-zag autour d'une radiale R issue de l'axe D. En d'autres termes, la lame est en lacet par le fait qu'elle définit une ligne longitudinale sinueuse. Les figures 1, 2, 7 et 11 illustrent une configuration où le moyen de rappel élastique 3 présente cette forme en serpent / en lacet.

La figure 10 illustre une autre variante avantageuse, dans laquelle au moins une zone à capacité de déformation élastique radiale 5 présente, dans le plan général P, une succession de poches séparées par des lames flexibles relativement fines, en symétrie autour d'un plan radial passant par l'axe D et par une radiale R issue de l'axe D.

De manière avantageuse, dans le cas d'une lame 8 en forme de serpent / en lacet, cette lame 8 est de section variable. Plus particulièrement encore, les boucles 9 sont moins larges selon la radiale R que dans leurs bords latéraux 91, 92, éloignés de la radiale R, et sont chacune plus proche de la suivante et/ou de la précédente au voisinage des bords latéraux 91, 92, que dans leur portion médiane 93 située sur la radiale R.

De façon avantageuse, au moins un mors 1 est un mors 1 mobile radialement par rapport à l'axe D, et plus particulièrement chaque mors 1, est un tel mors 1 mobile radialement par rapport à l'axe D.

Plus particulièrement, l'ensemble des moyens de rappel élastique 3, et des zones à capacité de déformation élastique radiale 5, que comporte le préhenseur 100, sont agencés de façon à ce que la résultante au niveau de l'axe D des efforts appliqués par les mors 1 sur un composant 200 soit nulle. Dans une variante illustrée, trois moyens de rappel élastique 3 identiques sont disposés à 120°. Dans une autre variante, un nombre entier N de moyens de rappel élastique 3, ou de zones à capacité de déformation élastique radiale 5, identiques, sont séparés par des angles aux centres égaux de valeur 360°/N par rapport à l'axe D. Dans d'autres variantes, des moyens de rappel élastique 3, ou des zones à capacité de déformation élastique radiale 5, identiques, sont disposés en symétrie axiale deux à deux par rapport à l'axe D. D'autres variantes encore peuvent combiner ces différentes configurations.

Pour faciliter l'insertion d'un préhenseur 100 sur ou dans un composant 200, avantageusement au moins un mors 1, et plus particulièrement chaque mors 1 de ce préhenseur 100, comporte au moins un relief 11, qui est saillant par rapport au support 2 au niveau d'un premier côté axial du préhenseur 100, dit côté d'insertion, agencé pour la mise en coopération du préhenseur 100 et d'un composant d'horlogerie 200, et y comporte, à une extrémité distale, au moins une surface d'introduction 12 biseautée et/ou rayonnée pour faciliter l'insertion d'un dit composant d'horlogerie 200 dans ou sur le préhenseur 100, ou du préhenseur 100 sur ou dans un composant d'horlogerie 200. En particulier, une telle surface d'introduction 12 est un chanfrein très peu pentu, par exemple selon un angle de 15° à 35° sur une hauteur de quelques dixièmes de millimètre.

On comprend en effet que le composant 200 peut être de forme pleine, avec un maintien par l'extérieur dans la configuration de la figure 3, ou bien de forme annulaire ou similaire, avec un maintien par l'intérieur dans la configuration de la figure 4. Le préhenseur 100 peut aussi être polyvalent comme sur la figure 5, pour un maintien externe ou interne d'un composant 200.

Au moins un mors 1, et de préférence chaque mors 1, comporte une surface frontale de butée 13, agencée pour coopérer en appui axial avec un composant 200 pour l'arrêter dans une position axiale précise selon l'axe D.

La surface d'appui 10 est avantageusement une surface d'appui 15 parallèle à l'axe D, notamment sous la forme d'un secteur cylindrique.

Dans une configuration particulière visible sur les figures 8 et 9, le préhenseur 100 comporte, dans un plan parallèle au plan P, une surface de limitation 35 du côté opposé aux mors, et plus particulièrement aux reliefs saillants 11, par rapport à au moins un moyen de rappel élastique 3, et plus particulièrement chaque moyen de rappel élastique 3, ou par rapport à au moins une zone à capacité de déformation élastique radiale 5, et plus particulièrement chaque zone à capacité de déformation élastique radiale 5, que comporte le préhenseur. Cette surface de limitation 35 est de préférence distante de cet au moins un dit moyen de rappel élastique 3, et plus particulièrement de chaque moyen de rappel élastique 3, ou de cette au moins une zone à capacité de déformation élastique radiale 5, et plus particulièrement de chaque zone à capacité de déformation élastique radiale 5, d'une valeur d'espacement E non nulle, pour autoriser un léger fléchissement axial, selon l'axe D, de cet au moins un moyen de rappel élastique 3, et plus particulièrement de chaque moyen de rappel élastique 3, ou de cette au moins une dite zone à capacité de déformation élastique radiale 5, et plus particulièrement de chaque zone à capacité de déformation élastique radiale 5, lors de l'insertion d'un composant d'horlogerie 200 dans ou sur le préhenseur 100, ou lors de l'insertion du préhenseur 100 sur ou dans un composant d'horlogerie 200, en limitant le frottement axial. Cette valeur d'espacement E est limitée à une valeur seuil prédéterminée, pour chaque type de préhenseur 100, pour prévenir toute déformation permanente et toute rupture d'un moyen de rappel élastique 3, et plus particulièrement de chaque moyen de rappel élastique 3, ou d'une zone à capacité de déformation élastique radiale 5, et plus particulièrement chaque zone à capacité de déformation élastique radiale 5.

Dans une exécution particulière, le préhenseur 100 est monobloc. Ce préhenseur 100 peut être réalisé dans un matériau métallique comme un acier inoxydable, un acier à ressort, ou un autre alliage, et usiné, en ce qui concerne notamment les moyens de rappel élastique 3 et/ou les zones à capacité de déformation élastique radiale 5 qu'il comporte, par électroérosion à fil et/ou par enfonçage ; une telle exécution convient bien au maintien de composants 200 massifs, avec une force de serrage importante, et des moyens de rappel élastique de raideur élevée. Un préhenseur 100 de diamètre 40 mm, avec trois ressorts serpent à 120° de 0,65 mm de section la plus faible, en acier inox 1.4301 ou 1.4310, avec un support de hauteur 6 mm, pour la préhension d'un composant de diamètre 34 mm ; présente ainsi une raideur par mors comprise entre 25 N/mm et 45 N/mm, plus particulièrement entre 30 N/mm et 40 N/mm. La poussée axiale, selon le type de composant 200 à manipuler, peut être ajustée à une valeur comprise entre 6N et 30N pour son insertion dans les mors.

Pour la préhension de composants 200 de nature plus délicate, le préhenseur 100 peut être réalisé par stéréolithographie, par un procédé « LIGA », « DRIE » ou similaire, et en particulier en nickel, nickel-phosphore, silicium et/ou au moins un oxyde de silicium, ou dans un matériau amorphe ou au moins partiellement amorphe ; naturellement, la force de serrage appliquée est ici très faible, ainsi que la course radiale des mors; un tel préhenseur constitue une bonne solution pour la manipulation ou le maintien de composants 200 très fragiles, par exemple pour le montage de masselottes d'inertie sur un balancier.

Les figures qui représentent le préhenseur 100 muni de moyens de rappel élastique 3 constitués de ressorts en serpent les montrent dans la position de service du préhenseur, avec ces ressorts serpents bandés et arrêtés par la coopération de tenons avec des mortaises. Ces préhenseurs sont réalisés à l'état libre avec chaque ressort serpent s'étendant radialement dans un logement de guidage 4, avec son extrémité distale au-delà du support 2 ; le ressort serpent est ensuite comprimé hors plan, jusqu'à une position radiale de maintien par le système tenon-mortaise. Sur l'exemple non limitatif illustré aux figures 1, 2, 7, 11, l'extension radiale du ressort serpent à l'état libre est comprise entre 2,5 fois et 4,0 fois son extension radiale à l'état comprimé, et notamment entre 3,1 fois et 3,5 fois son extension radiale à l'état comprimé. L'extension radiale du ressort serpent à l'état comprimé est comprise entre 0,10 fois et 0,24 fois le diamètre maximal du support 2, plus particulièrement entre 0,15 fois et 0,19 fois le diamètre maximal du support.

Plus particulièrement la section (plus petite dimension) de la lame 8 est comprise entre 0,090 fois et 0,126 fois sa propre hauteur, plus particulièrement entre 0,103 fois et 0,113 fois sa propre hauteur.

Plus particulièrement la section de la lame 8 est comprise entre 0,090 fois et 0,126 fois la hauteur du support 2, plus particulièrement entre 0,103 fois et 0,113 fois la hauteur du support 2.

Plus particulièrement la section de la lame 8 est comprise entre 0,175 fois et 0,211 fois le diamètre maximal du plus grand composant 200 à saisir, plus particulièrement entre 0,185 fois et 0,201 fois le diamètre maximal de ce plus grand composant 200.L'appui sur l'ensemble tenon-mortaise selon une direction perpendiculaire à une radiale, ou sur tout autre mécanisme équivalent, est important pour éviter toute déformation angulaire du mors 1 et de son moyen de rappel élastique. Les réalisations illustrées garantissent une déformation uniquement dans la direction radiale, ce qui assure un maintien optimal du composant 200.

Dans une réalisation avantageuse, au moins un mors 1, et plus particulièrement chaque mors 1, du préhenseur 100 comporte au moins un relief 11 saillant par rapport au support 2 au niveau du côté d'insertion, et ce relief saillant 11 est amovible et rapporté sur un corps de préhenseur monobloc comportant le support 2, au moins un moyen de rappel élastique 3, et plus particulièrement chaque moyen de rappel élastique 3, ou au moins une zone à capacité de déformation élastique radiale 5, et plus particulièrement chaque zone à capacité de déformation élastique radiale 5, et une semelle de support 110, laquelle comporte des moyens d'assemblage agencés pour coopérer avec des moyens d'assemblage complémentaire 111, tels que des goupilles ou similaires, que comporte un relief saillant 11. D'autres goupilles, ou éléments de positionnement similaires, peuvent être montés sur le préhenseur 100 pour l'ajustement en position du composant. Cet agencement permet de réaliser le corps de préhenseur monobloc avec une hauteur H constante, ce qui facilite grandement sa réalisation et permet de réaliser le préhenseur 100 avec un coût de fabrication réduit.

Les figures montrent un cas particulier très polyvalent d'un préhenseur 100 permettant un serrage de composant 200, de forme ronde, par trois mors 1 décalés angulairement de 120° et se déformant dans le domaine élastique. Le principe est adaptable à différents diamètres de rondelles. Par exemple, pour un composant de diamètre 34 mm, la course par mors est avantageusement de +/- 0,2 mm ; un débattement de 0,1 mm peut déjà être suffisant. Ainsi les butées permettant une course de chaque mors de 0,2 mm, soit +/- 0,1 mm se révèlent appropriées pour de nombreuses pièces horlogères à tenir pour les usiner. On est clairement dans les tolérances classiques pour des ébauches du type horloger à usiner encore avec une telle course / un tel débattement.

Les butées évitent un trop grand déplacement du mors, et donc sa rupture ou celles des éléments élastiques 3, 5, que comporte le préhenseur. L'exécution particulière d'un élément de rappel élastique sous la forme d'un ressort en serpent autorise la préhension de composants de diamètre inconstant sans apport d'énergie. De plus, le mécanisme ne requiert aucun entretien, et possède une très grande durée de vie, comparable à celle des manipulateurs destinés à embarquer de tels préhenseurs.

Ce préhenseur formant pince ne nécessite pas d'énergie, hormis la poussée axiale du composant dans les mors, qui correspond à un mouvement qui est de toute façon exécuté par le manipulateur ou par la machine de production. Cette solution est économique, et présente de surcroît l'avantage de pouvoir être implémentée dans un encombrement restreint.

Le choix du matériau du préhenseur est lié à la nature des composants à manipuler ou à maintenir, et à leur résistance. L'utilisation d'aciers inoxydables tel que 1.4301, 1.4310, ou d'aciers à ressort convient bien à des pièces massives d'ébauches, platines, masses oscillantes, et analogues. L'utilisation de préhenseurs en matériaux moins denses, « Nylon » ou autre, est envisageable pour des composants de faibles sections.

Un agencement de corps de préhenseur monobloc comportant le support, les moyens de rappel élastique, et une semelle de support pour porter des reliefs saillants amovibles permet une grande simplification de l'usinage, et une grande liberté de conception de la forme des reliefs saillants des mors.

Un aspect avantageux de l'invention réside dans l'agencement du ressort dans le plan de la base de la pince formant préhenseur. Le concept particulier de l'invention peut être résumé en la réalisation d'un mors sur support présentant une capacité de déformation élastique radiale.

Il est à noter qu'un débattement de 0.1 mm peut être suffisant pour exercer une force radiale suffisante. Tout dépend de la constante élastique du ressort : la constante k du ressort est choisie en fonction de l'application et de la force radiale de préhension nécessaire.

De nombreuses variantes sont imaginables :
- La surface de butée axiale 13 peut être, soit intégrée à un sous-ensemble monobloc, soit distincte sous forme d'un élément rapporté ;
- Le principe de l'invention est applicable à un système de butées axiales, en lieu et place du système de butées radiales propre à l'invention.

L'invention concerne encore un manipulateur 1000 pour l'extraction d'un composant d'horlogerie 200 d'un poste de production ou de convoyage 500, 600, et notamment d'un posage 510 que comporte ce poste de production ou de convoyage 500, 600, ou sa dépose sur un tel poste de production ou de convoyage 500, 600.

Le manipulateur 1000 comporte au moins un tel préhenseur 100, et ce manipulateur 1000 comporte des moyens, notamment motorisés, pour amener au moins un préhenseur 100, et plus particulièrement chaque préhenseur 100, vers un composant d'horlogerie 200 dans le sens du champ de gravité, pousser axialement selon l'axe D le préhenseur 100 sur ou dans le composant d'horlogerie 200 en déformant élastiquement au moins un dit moyen de rappel élastique 3, et plus particulièrement chaque moyen de rappel élastique 3, ou au moins une dite zone à capacité de déformation élastique radiale 5, et plus particulièrement chaque zone à capacité de déformation élastique radiale 5, de ce préhenseur 100 jusqu'à une position de butée axiale, et dégager le préhenseur 100 maintenant élastiquement le composant d'horlogerie 200 pour le transporter vers un autre poste de production ou de convoyage 600, au niveau duquel le manipulateur 1000 est agencé pour coopérer radialement avec un moyen d'éjection, notamment et non limitativement un doigt éjecteur 650, que comporte cet autre poste de production ou de convoyage 600 ou le manipulateur 1000 lui-même, pour une insertion radiale de ce moyen d'éjection, notamment de cet doigt éjecteur 650, entre le support 2 et le composant d'horlogerie 200 pour autoriser la dépose du composant d'horlogerie 200 sur un réceptacle ou un posage que comporte cet autre poste de production ou de convoyage 600.

Les figures 13 à 18 illustrent les étapes de ce transfert :
- Figure 13 : approche descendante du préhenseur 100 avec ses mors 1 dans une position d'excentration radiale minimale E1, vers le composant 200 maintenu sur un posage 510 du premier poste de production ou de convoyage 500 ;
- Figure 14 : poussée relative entre les mors 1 et le composant 200, guidé sur les surfaces d'insertion 12 et venant en appui sur des surfaces d'appui 15 parallèles à l'axe D ;
- Figure 15 : mise en position de butée axiale du composant 200 dans les mors 1 dans une position d'excentration radiale maximale E2 ;
- Figure 16 : dégagement du préhenseur 100, et désolidarisation du composant 200 d'avec le posage 510 qui le supportait jusqu'alors ;
- Figure 17 : transfert du préhenseur 100 vers l'autre poste de production ou de convoyage 600 ;
- Figure 18 : éjection du composant 200.

## Revendications

1. Préhenseur (100) à serrage radial, pour un composant d'horlogerie (200), comportant une pluralité de mors (1) répartis autour d'un axe (D), qui définit une direction d'insertion et/ou d'extraction pour le composant d'horlogerie, et reliés à un support (2) du préhenseur (100), chaque mors (1) comportant une surface d'appui (10) agencée pour assurer un contact radial, relativement audit axe, avec une surface antagoniste dudit composant (200) et pour pouvoir appliquer sur cette surface antagoniste une force de serrage radial, au moins un dit mors étant mobile radialement par rapport audit axe (D) et ayant une course essentiellement radiale par rapport à cet axe ; **caractérisé en ce que** chaque mors mobile est relié audit support par un moyen de rappel élastique radial (3) ou une zone à capacité de déformation élastique radiale (5) qui s'étend dans un plan général (P) perpendiculaire audit axe, la force de serrage radial exercée par chaque mors mobile sur le composant étant déterminée par la constante élastique du moyen de rappel élastique radial respectif ou de la zone à capacité de déformation élastique radiale respective.

2. Préhenseur (100) selon la revendication 1, **caractérisé en ce que** ledit moyen de rappel élastique radial (3) ou ladite zone à capacité de déformation élastique radiale est agencé entre le mors mobile respectif et ledit axe (D).

3. Préhenseur (100) selon la revendication 1 ou 2, **caractérisé en ce que** ledit support (2) s'étend également dans ledit plan général (P).

4. Préhenseur (100) selon l'une des revendications 1 à 3, **caractérisé en ce que** ladite course essentiellement radiale par rapport audit axe (D) est prévue dans une plage de déformation élastique dudit moyen de rappel élastique radial (3) ou de ladite zone à capacité de déformation élastique radiale (5) et est définie par la coopération entre, d'une part, des surfaces mobiles de butée (6) que comporte chaque mors mobile (1), et d'autre part des surfaces fixes de butée (7) que comporte ledit support (2).

5. Préhenseur (100) selon la revendication 4, **caractérisé en ce que** chaque mors mobile (1) comporte deux dites surfaces mobiles de butée (6), l'une première (61) tournée vers ledit axe (D) et l'autre deuxième (62) opposée audit axe, et **en ce que** ledit support (2) comporte deux dites surfaces fixes de butée (7), l'une première (71) opposée audit axe et agencée pour venir en appui de fin de course radiale centripète avec ladite première surface mobile de butée (61), et l'autre deuxième (72) tournée vers ledit axe et agencée pour venir en appui de fin de course radiale centrifuge avec ladite deuxième surface mobile de butée (62).

6. Préhenseur (100) selon la revendication 4 ou 5, **caractérisé en ce que** lesdites surfaces mobiles de butée (6) sont portées par un tenon (60) que comporte chaque mors (1) mobile, et **en ce que** lesdites surfaces fixes de butée (7) sont celles d'une mortaise (70) que comporte ledit support (2), ou inversement.

7. Préhenseur (100) selon l'une des revendications 1 à 6, **caractérisé en ce que** au moins un dit mors mobile (1) est guidé dans un logement de guidage (4) que comporte ledit support (2).

8. Préhenseur (100) selon la revendication 7, **caractérisé en ce que** le guidage dudit mors mobile (1) dans ledit logement de guidage (4) est strictement radial par rapport audit axe (D).

9. Préhenseur (100) selon l'une des revendications 1 à 8, **caractérisé en ce que** chaque mors mobile est relié audit support par un moyen de rappel élastique radial (3) et ledit moyen de rappel élastique radial (3) présente, en projection sur ledit plan (P), la forme d'un serpent avec une lame (8) formant des boucles (9) en zig-zag autour d'une radiale (R) issue dudit axe (D).

10. Préhenseur (100) selon la revendication 9, **caractérisé en ce que** ladite lame (8) a une section variable.

11. Préhenseur (100) selon l'une des revendications 1 à 10, **caractérisé en ce que** au moins un dit mors mobile (1) dudit préhenseur (100) comporte un relief (11) saillant par rapport audit support (2) au niveau d'un premier côté axial dudit préhenseur (100), dit côté d'insertion, agencé pour la mise en coopération dudit préhenseur (100) et d'un dit composant d'horlogerie (200), et y comporte, à une extrémité distale, au moins une surface d'introduction (12) biseautée et/ou rayonnée pour faciliter l'insertion d'un composant d'horlogerie (200) dans ou sur le préhenseur ou du préhenseur sur ou dans le composant d'horlogerie.

12. Préhenseur (100) selon la revendication 11, **caractérisé en ce que** le préhenseur (100) comporte, dans un plan parallèle audit plan général (P), une surface de limitation (35) située du côté opposé au relief saillant (11) dudit au moins un dit mors mobile, par rapport audit plan général (P), et distante dudit moyen de rappel élastique radial (3) ou de ladite zone à capacité de déformation élastique radiale de chaque mors mobile d'une valeur d'espacement (E) non nulle, limitée par la surface de limitation, pour autoriser un léger fléchissement axial selon ledit axe (D) de ce moyen de rappel élastique radial ou de cette zone à capacité de déformation élastique radiale lors de l'insertion dudit composant d'horlogerie (200) dans le préhenseur, ou du préhenseur sur ledit composant d'horlogerie, en limitant ainsi un frottement axial, ladite valeur d'espacement (E) étant limitée à une valeur seuil prédéterminée pour prévenir toute déformation permanente dudit moyen de rappel élastique radial ou de ladite zone à capacité de déformation élastique radiale.

13. Préhenseur (100) selon l'une des revendications 1 à 12, **caractérisé en ce que** le préhenseur (100) est monobloc.

14. Préhenseur (100) selon la revendication 11 ou 12, **caractérisé en ce que** ledit relief saillant (11) dudit au moins un mors mobile est amovible et rapporté sur un corps de préhenseur monobloc s'étendant dans ledit plan général et comportant ledit support (2), ledit moyen de rappel élastique radial (3) ou ladite zone à capacité de déformation élastique radiale (5) de chaque mors mobile et une semelle (110) formant chaque mors mobile et portant ledit relief saillant (11) amovible respectif.

## Patentansprüche

1. Greifer (100) mit radialer Klemmung, für eine Uhrwerkkomponente (200), umfassend eine Vielzahl von Backen (1), die um eine Achse (D) verteilt sind, die eine Einführ- und/oder eine Extraktionsrichtung für die Uhrwerkkomponente definiert, und mit einem Träger (2) des Greifers (100) verbunden sind, jede Backe (1) umfassend eine Lagerfläche (10), die so angeordnet ist, dass sie einen radialen Kontakt, in Bezug auf die Achse, mit einer Gegenfläche an der Komponente (200) sicherstellt, und auf diese Gegenfläche eine radiale Klemmkraft aufbringen kann, wobei die mindestens eine Backe in Bezug auf die Achse (D) radial beweglich ist und eine im Wesentlichen radiale Bewegung in Bezug auf diese Achse aufweist; **dadurch gekennzeichnet, dass** jede bewegliche Backe mit dem Träger durch eine radiale elastische Rückstellvorrichtung (3) oder eine radial elastisch verformbare Zone (5), die sich in einer allgemeinen Ebene (P) senkrecht zu der Achse erstreckt, verbunden ist, wobei die radiale Klemmkraft, die von jeder beweglichen Backe auf die Komponente ausgeübt wird, durch den Elastizitätsmodul der jeweiligen radialen elastischen Rückstellvorrichtung oder der jeweiligen radial elastisch verformbaren Zone bestimmt wird.

2. Greifer (100) nach Anspruch 1, **dadurch gekennzeichnet, dass** die radiale elastische Rückstellvorrichtung (3) oder die radial elastisch verformbare Zone zwischen der jeweiligen beweglichen Backe und der Achse (D) angeordnet ist.

3. Greifer (100) nach Anspruch 1 oder 2, **dadurch gekennzeichnet, dass** sich der Träger (2) auch in der allgemeinen Ebene (P) erstreckt.

4. Greifer (100) nach einem der Ansprüche 1 bis 3, **dadurch gekennzeichnet, dass** die im Wesentlichen radiale Bewegung in Bezug auf die Achse (D) in einem elastischen Verformungsbereich der radialen elastischen Rückstellvorrichtung (3) oder der radial elastisch verformbaren Zone (5) bereitgestellt wird und durch den Eingriff zwischen, einerseits, beweglichen Anschlagflächen (6), die in der beweglichen Backe (1) enthalten sind, und, andererseits, festen Anschlagflächen (7), die in dem Träger (2) enthalten sind, definiert ist.

5. Greifer (100) nach Anspruch 4, **dadurch gekennzeichnet, dass** jede bewegliche Backe (1) zwei bewegliche Anschlagflächen (6) aufweist, die erste (61) der Achse (D) zugewandt und die zweite (62) gegenüber der Achse, und dadurch, dass der Träger (2) zwei feste Anschlagflächen (7) aufweist, die erste (71) gegenüber der Achse und derart angeordnet, dass sie am Ende ihrer zentripetalen Radialbewegung gegen die erste bewegliche Anschlagfläche (61) anliegt, und die zweite (72) der Achse zugewandt und derart angeordnet, dass sie am Ende ihrer radialen Zentrifugalbewegung an der zweiten beweglichen Anschlagfläche (62) anliegt.

6. Greifer (100) nach Anspruch 4 oder 5, **dadurch gekennzeichnet, dass** die beweglichen Anschlagflächen (6) von einem Dübel (60) getragen werden, der in jeder beweglichen Backe (1) enthalten ist, und dadurch, dass die festen Anschlagflächen (7) die einer Aushöhlung (70) sind, die in dem Träger (2) enthalten ist, oder umgekehrt.

7. Greifer (100) nach einem der Ansprüche 1 bis 6, **dadurch gekennzeichnet, dass** mindestens eine bewegliche Backe (1) in einer Führungsaushöhlung (4) geführt wird, die in dem Träger (2) enthalten ist.

8. Greifer (100) nach Anspruch 7, **dadurch gekennzeichnet, dass** das Führen der beweglichen Backe (1) in der Führungsaushöhlung (4) streng radial in Bezug auf die Achse (D) erfolgt.

9. Greifer (100) nach einem der Ansprüche 1 bis 8, **dadurch gekennzeichnet, dass** jede bewegliche Backe mit dem Träger durch eine radiale elastische Rückstellvorrichtung (3) verbunden ist und die radiale elastische Rückstellvorrichtung (3) in Projektion auf die Ebene (P) die Form einer Schlange mit einem Band (8) aufweist, das Zickzack-Schlaufen (9) um eine Radiale (R) von der Achse (D) bildet.

10. Greifer (100) nach Anspruch 9, **dadurch gekennzeichnet, dass** das Band (8) einen variablen Querschnitt aufweist.

11. Greifer (100) nach einem der Ansprüche 1 bis 10, **dadurch gekennzeichnet, dass** mindestens eine Backe (1) des Greifers (100) eine Aussparung (11) umfasst, die relativ zu dem Träger (2) auf einer ersten axialen Seite des Greifers (100) vorsteht, als Einschubseite bezeichnet, derart angeordnet, um den Greifer (100) und eine Uhrwerkkomponente (200) in Eingriff zu nehmen, und darin umfassend, an einem distalen Ende, mindestens eine abgeschrägte und/oder geriffelte Einführfläche (12) zum Erleichtern des Einführens einer Uhrwerkkomponente (200) in oder auf den Greifer oder des Greifers auf oder in die Uhrwerkkomponente.

12. Greifer (100) nach Anspruch 11, **dadurch gekennzeichnet, dass** der Greifer (100) umfasst, in einer Ebene parallel zu der allgemeinen Ebene (P), eine Begrenzungsfläche (35), angeordnet auf der Seite gegenüberliegend der vorstehenden Aussparung (11) der mindestens einen Backe, in Bezug auf die allgemeine Ebene (P), und beabstandet von der radialen elastischen Rückstellvorrichtung (3) oder von der radial elastisch verformbaren Zone an jeder beweglichen Backe um einen Abstandswert (E) ungleich Null, begrenzt durch die Begrenzungsfläche, um eine leichte axiale Biegung entlang der Achse (D) der radialen elastischen Rückstellvorrichtung oder der radial elastisch verformbaren Zone zu ermöglichen, wenn die Uhrwerkkomponente (200) in den Greifer oder der Greifer auf die Uhrwerkkomponente eingesetzt wird, wodurch eine axiale Reibung begrenzt wird, wobei der Abstandswert (E) auf einen vorbestimmten Schwellenwert begrenzt ist, um eine dauerhafte Verzerrung der radialen elastischen Rückstellvorrichtung oder der radial elastisch verformbaren Zone zu verhindern.

13. Greifer (100) nach einem der Ansprüche 1 bis 12, **dadurch gekennzeichnet, dass** der Greifer (100) einstückig ausgebildet ist.

14. Greifer (100) nach Anspruch 11 oder 12, **dadurch gekennzeichnet, dass** die vorstehende Aussparung (11) an der mindestens einen beweglichen Backe abnehmbar und an einem einstückigen Greiferkörper angebracht ist, der sich in der allgemeinen Ebene erstreckt und umfassend den Träger (2), die radiale elastische Rückstellvorrichtung (3) oder die radial elastisch verformbare Zone (5) an jeder beweglichen Backe und eine Unterlage (110), jede bewegliche Backe bildend und die jeweilige abnehmbare vorstehende Aussparung (11) tragend.

## Claims

1. A gripper (100) with radial clamping, for a horology component (200) comprising a plurality of jaws (1) distributed about an axis (D) that defines a direction of insertion and/or of extraction for the horology component, and connected to a support (2) of the gripper (100), each jaw (1) comprising a bearing surface (10) arranged to ensure a radial contact, relative to said axis, with a counter surface on said component (200) and to be able to apply on this counter surface a radial clamping force, at least one said jaw being radially mobile relative to said axis (D) and having an essentially radial travel relative to this axis; **characterised in that** each mobile jaw is connected to said support by a radial resilient return means (3) or a radially resiliently distortable zone (5) that extends in a general plane (P) perpendicular to said axis, the radial clamping force exerted by each mobile jaw on the component being determined by the elastic modulus of the respective radial resilient return means or of the respective radially resiliently distortable zone.

2. The gripper (100) according to claim 1, **characterised in that** said radial resilient return means (3) or said radially resiliently distortable zone is arranged between the respective mobile jaw and said axis (D).

3. The gripper (100) according to claim 1 or 2, **characterised in that** said support (2) also extends in said general plane (P).

4. The gripper (100) according to any of claims 1 to 3, **characterised in that** said essentially radial travel relative to said axis (D) is provided in an elastic distortion range of said radial resilient return means (3) or of said radially resiliently distortable zone (5) and is defined by the engagement between, on the one hand, mobile stop surfaces (6) comprised in said mobile jaw (1), and on the other hand fixed stop surfaces (7) comprised in said support (2).

5. The gripper (100) according to claim 4, **characterised in that** each mobile jaw (1) comprises two said mobile stop surfaces (6), the first one (61) turned towards said axis (D) and the second one (62) opposite said axis, and **in that** said support (2) comprises two said fixed stop surfaces (7), the first one (71) opposite said axis and arranged to bear at the end of its centripetal radial travel against said first mobile stop surface (61), and the second one (72) turned towards said axis and arranged to bear at the end of its centrifugal radial travel against said second mobile stop surface (62).

6. The gripper (100) according to claim 4 or 5, **characterised in that** said mobile stop surfaces (6) are carried by a post (60) comprised in each mobile jaw (1), and **in that** said fixed stop surfaces (7) are those of a slot (70) comprised in said support (2), or inversely.

7. The gripper (100) according to any of claims 1 to 6, **characterised in that** at least one said mobile jaw (1) is guided in a guide slot (4) comprised in said support (2).

8. The gripper (100) according to claim 7, **characterised in that** the guiding of said mobile jaw (1) in said guide slot (4) is strictly radial relative to said axis (D).

9. The gripper (100) according to any of claims 1 to 8, **characterised in that** said each mobile jaw is connected to said support by a radial resilient return means (3) and said radial resilient return means (3) has, in projection over said plane (P), the shape of a snake with a strip (8) forming zig-zag loops (9) about a radial (R) from said axis (D).

10. The gripper (100) according to claim 9, **characterised in that** said strip (8) has a variable cross-section.

11. The gripper (100) according to any of claims 1 to 10, **characterised in that** at least one said jaw (1) of said gripper (100) comprises a relief (11) protruding relative to said support (2) on a first axial side of said gripper (100), referred to as the insertion side, arranged for engaging said gripper (100) and a said horology component (200), and comprises therein, at a distal end, at least one bevelled and/or striated introduction surface (12) to facilitate the insertion of a horology component (200) into or onto the gripper or of the gripper onto or into the horology component.

12. The gripper (100)according to claim 11, **characterised in that** the gripper (100) comprises, in a plane parallel to said general plane (P), a limit surface (35) located on the side opposite the protruding relief (11) of said at least one said jaw, relative to said general plane (P), and distant from said radial resilient return means (3) or from said radially resiliently distortable zone on each mobile jaw by a non-zero spacing value (E), limited by the limit surface, to allow for a slight axial bend along said axis (D) of this radial resilient return means or of said radially resiliently distortable zone when said horology component (200) is inserted into the gripper, or of the gripper onto said horology component, thus limiting an axial friction, said spacing value (E) being limited to a predetermined threshold value to prevent any permanent distortion of said radial resilient return means or of said radially resiliently distortable zone.

13. The gripper (100) according to any of claims 1 to 12, **characterised in that** the gripper (100) is made in one piece.

14. The gripper (100) according to claim 11 or 12, **characterised in that** said protruding relief (11) on said at least one mobile jaw is detachable and attached on a one-piece gripper body extending in said general plane and comprising said support (2), said radial resilient return means (3) or said radially resiliently distortable zone (5) on each mobile jaw and a sole (110) forming each mobile jaw and carrying said respective detachable protruding relief (11).
